(19) Europäisches Patentamt
European Patent Office
Office européen des brevets

(11) **EP 3 832 576 A1**

(12) **EUROPEAN PATENT APPLICATION**
published in accordance with Art. 153(4) EPC

(43) Date of publication:
**09.06.2021 Bulletin 2021/23**

(51) Int Cl.:
***G06Q 30/02*** (2012.01)  ***G01C 21/00*** (2006.01)

(21) Application number: **19862558.4**

(86) International application number:
**PCT/CN2019/099248**

(22) Date of filing: **05.08.2019**

(87) International publication number:
**WO 2020/057275 (26.03.2020 Gazette 2020/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **17.09.2018 CN 201811080091**

(71) Applicants:
• **Beijing Jingdong Shangke Information Technology Co., Ltd.**
**Beijing 100086 (CN)**

• **Beijing Jingdong Century Trading Co., Ltd.**
**Beijing 100176 (CN)**

(72) Inventors:
• **CHENG, Ruihua**
**Beijing 100086 (CN)**
• **LIU, Renmin**
**Beijing 100086 (CN)**
• **LIU, Xu**
**Beijing 100086 (CN)**

(74) Representative: **Ruuskanen, Juha-Pekka**
**Page White & Farrer**
**Bedford House**
**John Street**
**London WC1N 2BF (GB)**

(54) **TRAJECTORY DETERMINATION METHOD AND APPARATUS, AND TIME RECOMMENDATION METHOD, APPARATUS AND SYSTEM**

(57) Provided are a trajectory determination method and apparatus, and a time recommendation method, apparatus and system, which relate to the technical field of logistics. The trajectory determination method comprises: acquiring trajectory information of multiple trajectory points of a first object within a set time period, wherein the trajectory information of each trajectory point comprises the geographic location of the trajectory point and the time when the first object is located at the trajectory point; clustering the multiple trajectory points according to the geographic locations of all the trajectory points to obtain multiple regions which do not overlap each other, wherein the density of trajectory points in each region is greater than a preset density; determining the time corresponding to each region according to the time of at least one trajectory point in each region; arranging the multiple regions according to the times corresponding to each region to obtain a regional motion trajectory of the first object; and determining a frequent trajectory of a frequent motion of the first object based on multiple regional motion trajectories, wherein the frequent trajectory comprises a frequent region and a frequent time period corresponding to the frequent region.

Fig. 1

**Description**

**CROSS-REFERENCE TO RELATED APPLICATIONS**

The present application claims priority to China Patent Application No. 201811080091.9 filed on September 17, 2018, the disclosure of which is incorporated by reference herein in its entirety.

**TECHNICAL FIELD**

The present disclosure relates to the field of logistics technology, in particularly to a method and an apparatus for determining trajectory, and a method, an apparatus and a system for recommending time.

**BACKGROUND**

In the field of logistics, when a delivery person performs delivery, the suitable delivery time for different delivery addresses might be different. For example, if the delivery address is a residential region, the suitable delivery time might not be concentrated; and if the delivery address is a company, the suitable delivery time might be concentrated on working hours.

**SUMMARY**

According to one aspect of the embodiments of the present disclosure, provided is a method for determining trajectory, comprising: obtaining trajectory information of each trajectory point of a plurality of trajectory points of a first object within a preset time period, wherein the trajectory information of each trajectory point comprises a geographic location of each trajectory point and a time when the first object is located at each trajectory point; clustering the plurality of trajectory points according to the geographic location of each trajectory point to obtain a plurality of regions not overlapped with each other, wherein a density of trajectory points in each region of the plurality of regions is greater than a preset density; determining a time corresponding to each region according to a time of at least one of the trajectory points in each region; arranging the plurality of regions according to the time corresponding to each region to obtain a region motion trajectory of the first object; repeating the obtaining, the clustering, the determining, and the arranging to obtain a plurality of region motion trajectories of the first object; and determining a frequent trajectory that the first object moves frequently based on the plurality of region motion trajectories, wherein the frequent trajectory comprises a frequent region and a frequent time period corresponding to the frequent region.

In some embodiments, the determining a frequent trajectory that the first object moves frequently based on the plurality of region motion trajectories comprises: selecting one of the plurality of region motion trajectories as a reference region motion trajectory; determining a plurality of region motion trajectories of a same type as the reference region motion trajectory, wherein i-th region in each of the plurality of region motion trajectories of the same type at least partially overlaps with i-th region in the reference region motion trajectory, $1 \leq i \leq N \leq M$, one of M and N is a number of regions in the reference region motion trajectory, the other is a number of regions in each of the plurality region motion trajectories of the same type, and the time corresponding to i-th region is earlier than the time corresponding to (i+1)-th region; extending a first time corresponding to i-th region in the reference region motion trajectory to obtain a first time range containing the first time; extending a second time corresponding to i-th region in each of the plurality of region motion trajectories of the same type to obtain a plurality of second time ranges each containing the second time; and determining the frequent trajectory according to the first time range and the plurality of second time ranges.

In some embodiments, the determining the frequent trajectory according to the first time range and the plurality of second time ranges comprises: counting a first total number of second time ranges of the plurality of second time ranges at least partially overlapped with the first time range; arranging an upper limit and a lower limit of the first time range, and an upper limit and a lower limit of each of the plurality of second time ranges in sequential time order to obtain a time sequence, in a case where the first total number is greater than a first preset number, wherein the time sequence comprises a plurality of sequence time periods, and an upper limit and a lower limit of each of the plurality of sequence time periods are two adjacent times in the time sequence; and determining the frequent trajectory according to the plurality of sequence time periods, the first time range, and the plurality of second time ranges.

In some embodiments, the determining the frequent trajectory according to the plurality of sequence time periods, the first time range, and the plurality of second time ranges comprises: counting a second total number of the first time range and second time ranges of the plurality of second time ranges at least partially overlapped with each sequence time period of the plurality of sequence time periods; determining each sequence time period as a frequent sub-time period and determining i-th region in the reference region motion trajectory as the frequent region, in a case where the second total number is greater than a second preset number; and determining the frequent time period according to all the frequent sub-time periods, wherein the frequent time period comprises all the frequent sub-time periods.

In some embodiments, a lower limit of the frequent time period is a lower limit which is the earliest of lower limits of all the frequent sub-periods, and an upper limit of the frequent time period is an upper limit which is the latest of upper limits of all the frequent sub-periods.

In some embodiments, the clustering the plurality of trajectory points comprises: dividing the plurality of trajectory points into a plurality of sub-regions; and combining adjacent sub-regions of the plurality of sub-regions with the density of trajectory points greater than the preset density to obtain the plurality of regions.

In some embodiments, the combining adjacent sub-regions of the plurality of sub-regions with the density of trajectory points greater than the preset density comprises: selecting a first sub-region with the density of trajectory points greater than the preset density from the plurality of sub-regions; judging whether the density of trajectory points of a sub-region of the plurality of sub-regions adjacent to the first sub-region is greater than the preset density to obtain a judgment result; combining the first sub-region with the sub-region to obtain a combined sub-region in a case where the judgment result is yes; repeating the judging and the combining by taking the combined sub-region as the first sub-region, until the density of trajectory points of each of the plurality of sub-regions adjacent to the first sub-region is not greater than the preset density to obtain one of the plurality of regions; and repeating the judging and the combining to obtain the plurality of regions, by selecting a sub-region with the density of trajectory points greater than the preset density from remaining sub-regions as the first sub-region.

According to another aspect of the embodiments of the present disclosure, provided is a method for recommending time, comprising: determining the frequent trajectory of the first object according to the method for determining trajectory of any one of above embodiments; judging whether a service address requested by a user is within the frequent region of the frequent trajectory; recommending the frequent time period corresponding to the frequent region to a second object in a case where the service address is within the frequent region of the frequent trajectory, so that a service is provided to the user by the second object according to the frequent time period.

According to still another aspect of the embodiments of the present disclosure, provided is a an apparatus for determining motion trajectory, comprising: a trajectory information obtaining module configured to obtain trajectory information of each trajectory point of a plurality of trajectory points of a first object within a preset time period, wherein the trajectory information of each trajectory point comprises a geographic location of each trajectory point and a time when the first object is located at each trajectory point; a trajectory point clustering module configured to cluster the plurality of trajectory points according to the geographic location of each trajectory point to obtain a plurality of regions not overlapped with each other, wherein a density of trajectory points in each region of the plurality of regions is greater than a preset density; a region time determining module configured to determine a time corresponding to each region according to a time of at least one of the trajectory points in each region; a region arranging and instructing module configured to arrange the plurality of regions according to the time corresponding to each region to obtain a region motion trajectory of the first object, and instruct the trajectory information obtaining module to repeatedly obtain the trajectory information to obtain a plurality of region motion trajectories of the first object after the region motion trajectory of the first object is obtained; and a frequent trajectory determining module configured to determine a frequent trajectory that the first object moves frequently based on the plurality of region motion trajectories, wherein the frequent trajectory comprises a frequent region and a frequent time period corresponding to the frequent region.

In some embodiments, the frequent trajectory determining module is configured to: select one of the plurality of region motion trajectories as a reference region motion trajectory; determine a plurality of region motion trajectories of a same type as the reference region motion trajectory, wherein i-th region in each of the plurality of region motion trajectories of the same type at least partially overlaps with i-th region in the reference region motion trajectory, $1 \leq i \leq N \leq M$, one of M and N is a number of regions in the reference region motion trajectory, the other is a number of regions in each of the plurality region motion trajectories of the same type, and the time corresponding to i-th region is earlier than the time corresponding to (i+1)-th region; extend a first time corresponding to i-th region in the reference region motion trajectory to obtain a first time range containing the first time; extend a second time corresponding to i-th region in each of the plurality of region motion trajectories of the same type to obtain a plurality of second time ranges each containing the second time; and determine the frequent trajectory according to the first time range and the plurality of second time ranges.

In some embodiments, the frequent trajectory determining module is configured to: count a first total number of second time ranges of the plurality of second time ranges at least partially overlapped with the first time range; arrange an upper limit and a lower limit of the first time range, and an upper limit and a lower limit of each of the plurality of second time ranges in sequential time order to obtain a time sequence, in a case where the first total number is greater than a first preset number, wherein the time sequence comprises a plurality of sequence time periods, and an upper limit and a lower limit of each of the plurality of sequence time periods are two adjacent times in the time sequence; and determine the frequent trajectory according to the plurality of sequence time periods, the first time range, and the plurality of second time ranges.

In some embodiments, the frequent trajectory determining module is configured to: count a second total number of the first time range and second time ranges of the plurality of second time ranges at least partially overlapped with each sequence time period of the plurality of sequence time periods; determine each sequence time period as a frequent sub-time period and determining i-th region in the reference region motion trajectory as the frequent region, in a case where the second total number is greater than a second preset number; and determine the frequent time period according to all the frequent sub-time periods, wherein the frequent time period comprises all the frequent sub-time periods.

In some embodiments, a lower limit of the frequent time period is a lower limit which is the earliest of lower limits of all the frequent sub-periods, and an upper limit of the frequent time period is an upper limit which is the latest of upper limits of all the frequent sub-periods.

In some embodiments, the trajectory point clustering module is configured to: divide the plurality of trajectory points into a plurality of sub-regions; and combine adjacent sub-regions of the plurality of sub-regions with the density of trajectory points greater than the preset density to obtain the plurality of regions.

In some embodiments, the trajectory point clustering module is configured to: select a first sub-region with the density of trajectory points greater than the preset density from the plurality of sub-regions; judge whether the density of trajectory points of a sub-region of the plurality of sub-regions adjacent to the first sub-region is greater than the preset density to obtain a judgment result; combine the first sub-region with the sub-region to obtain a combined sub-region in a case where the judgment result is yes; repeat the judge and the combine by taking the combined sub-region as the first sub-region, until the density of trajectory points of each of the plurality of sub-regions adjacent to the first sub-region is not greater than the preset density to obtain one of the plurality of regions; and repeat the judge and the combine to obtain the plurality of regions, by selecting a sub-region with the density of trajectory points greater than the preset density from remaining sub-regions as the first sub-region.

According to yet still another aspect of the embodiments of the present disclosure, provided is an apparatus for determining trajectory, comprising: a memory; and a processor coupled to the memory, wherein the processor is configured to implement the method for determining trajectory according to any one of above embodiments based on instructions stored in the memory.

According to yet still another aspect of the embodiments of the present disclosure, provided is an apparatus for recommending time, comprising: a memory; and a processor coupled to the memory, wherein the processor is configured to implement the method for recommending time according to any one of the above embodiments based on instructions stored in the memory.

According to a further aspect of the embodiments of the present disclosure, provided is a system for recommending time, comprising: a database configured to store trajectory point information of each trajectory point of a plurality of trajectory points of a first object; the apparatus for recommending time according to any one of the above embodiments; and a terminal configured to send a service address requested by a user to the apparatus for recommending time and receive the frequent time period sent by the apparatus for recommending time.

According to a further aspect of the embodiments of the present disclosure, provided is a computer-readable storage medium having computer program instructions stored thereon, wherein the method for determining trajectory or the method for recommending time according to any one of the above embodiments is implemented when the instructions are executed by a processor.

The technical solution of the present disclosure will be further described in detail below by means of the accompanying drawings and embodiments.

**BRIEF DESCRIPTION OF THE DRAWINGS**

The accompanying drawings, which constitute part of this specification, illustrate exemplary embodiments of the present disclosure and, together with this specification, serve to explain the principles of the present disclosure.

The present disclosure may be more clearly understood from the following detailed description with reference to the accompanying drawings, in which:

Fig. 1 is a schematic flowchart showing a method for determining trajectory according to some embodiments of the present disclosure;
Fig. 2 is a schematic flowchart view of clustering a plurality of trajectory points according to some implementations of the present disclosure;
Fig. 3 is a schematic flowchart view of determining a frequent trajectory according to some implementations of the present disclosure;
Fig. 4 is a schematic flowchart showing a method for recommending time according to some embodiments of the present disclosure;
Fig. 5 is a schematic structural view showing an apparatus for determining trajectory according to some embodiments of the present disclosure;

Fig. 6 is a schematic structural view showing an electronic apparatus according to some embodiments of the present disclosure;
Fig. 7 is a schematic view showing the architecture of a system for recommending time according to some embodiments of the present disclosure.

It should be understood that the dimensions of the various parts shown in the accompanying drawings are not necessarily drawn according to the actual scale. In addition, the same or similar reference signs are used to denote the same or similar components.

## DETAILED DESCRIPTION

Various exemplary embodiments of the present disclosure will now be described in detail with reference to the accompanying drawings. The following description of the exemplary embodiments is merely illustrative and is in no way intended as a limitation to the present disclosure, its application or use. The present disclosure may be implemented in many different forms, which are not limited to the embodiments described herein. These embodiments are provided to make the present disclosure thorough and complete, and fully convey the scope of the present disclosure to those skilled in the art. It should be noticed that: relative arrangement of components and steps, material composition, numerical expressions, and numerical values set forth in these embodiments, unless specifically stated otherwise, should be explained as merely illustrative, and not as a limitation.

The use of the terms "first", "second" and similar words in the present disclosure do not denote any order, quantity, or importance, but are merely used to distinguish between different parts. A word such as "comprise", "have" or variants thereof means that the element before the word covers the element (s) listed after the word without excluding the possibility of also covering other elements. The terms "up", "down", or the like are used only to represent a relative positional relationship, and the relative positional relationship may be changed correspondingly if the absolute position of the described object changes.

In the present disclosure, when it is described that a specific component is disposed between a first component and a second component, there may be an intervening component between the specific component and the first component or between the specific component and the second component. When it is described that a specific part is connected to other parts, the specific part may be directly connected to the other parts without an intervening part, or not directly connected to the other parts with an intervening part.

Unless otherwise defined, all terms (including technical and scientific terms) used herein have the same meanings as the meanings commonly understood by one of ordinary skill in the art to which the present disclosure belongs. It should also be understood that terms as defined in general dictionaries, unless explicitly defined herein, should be interpreted as having meanings that are consistent with their meanings in the context of the relevant art, and not to be interpreted in an idealized or extremely formalized sense.

Techniques, methods, and apparatus known to those of ordinary skill in the relevant art may not be discussed in detail, but where appropriate, these techniques, methods, and apparatuses should be considered as part of this specification.

The inventors have noticed that, a richly experienced old delivery person, who is well familiar with the suitable delivery time for different delivery addresses, has relatively high delivery efficiency when performing delivery. However, a new delivery person, who is not familiar with the suitable delivery time for different delivery addresses, has relatively low delivery efficiency.

In the related art, manual guidance from an old delivery person is given to a new delivery person. In such a method, a lot of labor and time are wasted, which is not favorable for improving overall delivery efficiency.

In view of the above, the embodiments of the present disclosure provide the following technical solutions.

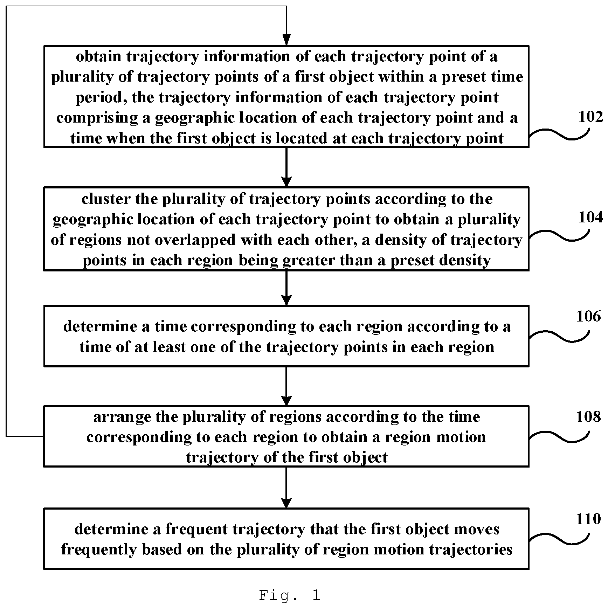

Fig. 1 is a schematic flowchart showing a method for determining trajectory according to some embodiments of the present disclosure.

At step 102, trajectory information of each of a plurality of trajectory points of the first object within a preset time period is obtained. The trajectory information of each trajectory point comprises a geographic location of this trajectory point and the time when the first object is located at this trajectory point.

In some embodiments, the first object may be a richly experienced old delivery person, for example. The preset time period may be, for example, one day, or may be a certain time period of a day, such as the morning.

The first object may carry a positioning device when moving. The positioning device may record a geographic location of the first object every preset time (for example, 30s), that is, a trajectory point may be obtained. Therefore, a plurality of trajectory points of the first object may be obtained within the preset time period.

At step 104, the plurality of trajectory points is clustered according to the geographic location of each trajectory point to obtain a plurality of regions not overlapped with each other. The density of trajectory points in each region is greater than a preset density.

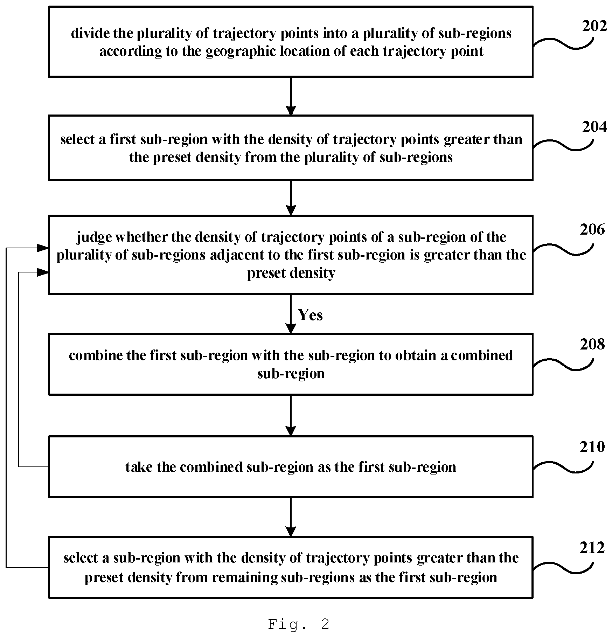

For example, the plurality of trajectory points may be divided into a plurality of sub-regions according to the geographic location of each trajectory point; and then adjacent sub-regions of the plurality of sub-regions with the density of trajectory points greater than the preset density are combined to obtain the plurality of regions. The process of clustering a plurality of trajectory points according to some embodiments of the present disclosure will be described in detail later in conjunction with Fig. 2.

At step 106, a time corresponding to each region is determined according to the time of at least one trajectory point in each region.

For example, the time corresponding to each region may be determined according to a trajectory point with the earliest time, or a trajectory point with the latest time, or all the trajectory points in each region.

In some implementations, the earliest time of the times of all the trajectory points in each region may serve as the time corresponding to each region. In other implementations, the latest time of the times of all the trajectory points in each region may serve as the time corresponding to each region. In still other implementations, the average time of the times of all the trajectory points in each region may be calculated and serve as the time corresponding to each region.

At step 108, the plurality of regions is arranged according to the time corresponding to each region to obtain a region motion trajectory of the first object.

For example, three regions A, B, and C may be obtained after clustering. The times corresponding to the three regions A, B and C are t1, t2, and t3 respectively, where t1 is earlier than t2, and t2 is earlier than t3. In this case, the region motion trajectory of the first object may be expressed as A→B→C.

The above steps 102 to 108 are repeatedly performed to obtain a plurality of region motion trajectories of the first object in different preset time periods. The number of times of repeatedly performing the above steps 102 to 108 may be determined according to actual conditions, for example, 100 times, 200 times, etc.

The region motion trajectories of the first object in different time periods may be the same or different. For example, the region motion trajectory on the first day is A→B→C, the region motion trajectory on the second day is A'→B'→C', and the region motion trajectory on the third day is A→B→C.

At step 110, a frequent trajectory the first object frequently moves is determined based on the plurality of region motion trajectories. The frequent trajectory comprises a frequent region and a frequent time period corresponding to the frequent region.

In some implementations, the number of each region motion trajectory in each region may be directly counted, and a region motion trajectory with the number greater than a preset number serves as the frequent trajectory. Assume that the region motion trajectory A→B→C is a frequent trajectory, the frequent region may be any one region in the region motion trajectory A→B→C, i.e., region A, region B, and region C. The frequent time period corresponding to a frequent region may be determined based on the time corresponding to a region in the region motion trajectory A→B→C. Taking the region A as an example, the time period containing the time corresponding to the region A may serve as the frequent time period corresponding to the region A.

In other implementations, the frequent trajectory the first object frequently moves may be determined according to the implementations described later.

In the above embodiments, a plurality of region motion trajectories of the first object may be obtained by clustering a plurality of trajectory points of the first object, and a frequent trajectory of the first object may be further obtained based on the plurality of region motion trajectories. The frequent trajectory may provide a reference for the second object to provide service to a user, without requiring manual guidance from the first object, which is beneficial to improve the service efficiency.

Fig. 2 is a schematic flowchart view of clustering a plurality of track points according to some implementations of the present disclosure.

At step 202, the plurality of trajectory points is divided into a plurality of sub-regions according to the geographic location of each trajectory point.

The shape of a sub-region may be square, rectangular, or circular, for example. In some embodiments, the areas of different sub-regions may be the same. In other embodiments, the areas of different sub-regions may be different.

At step 204, a first sub-region with a density of trajectory points greater than a preset density is selected from the plurality of sub-regions.

For example, a sub-region with the density of trajectory points greater than the preset density may be selected from a plurality of sub-regions as the first sub-region randomly or according to a preset rule. The preset rule may be, for example, sequentially judging the densities of trajectory points of the sub-regions in a sequence from left to right and from top to bottom, until a sub-region with the density of trajectory points greater than the preset density is found.

At step 206, whether the density of trajectory points of a sub-region adjacent to the first sub-region is greater than the preset density is judged to obtain a judgment result. In a case where the judgment result is yes, proceed to perform step 208; in a case where the judgment result is no, return to perform step 206.

Here, any one sub-region adjacent to the first sub-region may be selected for judging. If the judgment result is no, another sub-region adjacent to the first sub-region is then selected for judging.

At step 208, the first sub-region and the sub-region adjacent to the first sub-region are combined to obtain a combined sub-region.

At step 210, the combined sub-region is taken as the first sub-region and step 206 and step 208 are returned to perform, until the density of trajectory points of each sub-region adjacent to the first sub-region is not greater than the preset density to obtain one of the plurality of regions.

At step 212, a sub-region with the density of trajectory points greater than the preset density is selected from remaining sub-regions as the first sub-region and step 206 to step 210 are returned to perform to obtain a plurality of regions.

For example, after a region is obtained, all sub-regions in the region may be removed. Based on the remaining sub-regions, another region may be obtained in the above manner. In this way, a plurality of regions may be obtained.

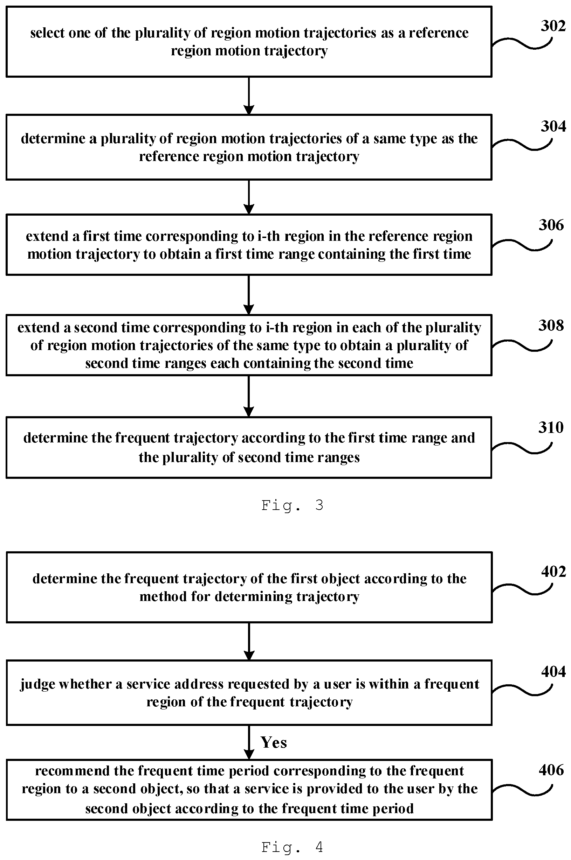

Fig. 3 is a schematic flowchart view of determining frequent trajectories according to some implementations of the present disclosure.

At step 302, one of the plurality of region motion trajectories is selected as a reference region motion trajectory.

For example, a region motion trajectory may be randomly selected from the plurality of region motion trajectories as the reference region motion trajectory, or a region motion trajectory with the largest number of regions may be selected as the reference region motion trajectory.

At step 304, a plurality of region motion trajectories of a same type as the reference region motion trajectory is determined.

Here, i-th region in each region motion trajectory of the same type at least partially overlaps with i-th region in the reference region motion trajectory, where $1 \leq i \leq N \leq M$. One of M and N is the number of regions in the reference region motion trajectory, and the other is the number of regions in each region motion trajectory of the same type, and the time corresponding to i-th region is earlier than the time corresponding to (i+1)-th region .

Assume that the reference region motion trajectory is A→B→C→D→E, if a region motion trajectory is A'→B'→C'→D', region A at least partially overlaps with region A', region B at least partially overlaps with region B', region C at least partially overlaps with region C', and region D at least partially overlaps with region D', it is considered that this region motion trajectory and the reference region motion trajectory belong to the same type of region motion trajectories, that is, this region motion trajectory is a region motion trajectory of the same type. If a region motion trajectory is A'→B'→C'→D'→E'→F', region A at least partially overlaps with region A', region B at least partially overlaps with region B', region C at least partially overlaps with region C', region D at least partially overlaps with region D', and region E at least partially overlaps with region E', it is considered that this motion trajectory of the region and the reference region motion trajectory also belong to the same type of region motion trajectories.

In some embodiments, if the trajectory point with the earliest time in one region is within another region, it may be considered that the two regions partially overlap.

At step 306, a first time corresponding to i-th region in the reference region motion trajectory is extended to obtain a first time range containing the first time.

For example, the first time $t_{1i}$ is extended taking the first time $t_{1i}$ corresponding to i-th region in the reference region motion trajectory as the center and the preset time R as the radius, to obtain a first time range $[l_{1i}, h_{1i}]$ containing the first time $t_{1i}$, where $l_{1i}=t_{1i}-R$, and $h_{1i}=t_{1i}+R$.

Assume that the reference region motion trajectory comprises n regions, i may be any integer from 1 to n, so that n first time ranges may be obtained. Here, the n first time ranges may be expressed as $A1 = [l_{11},h_{11}] \times \cdots [l_{1n},h_{1n}]$.

At step 308, a second time corresponding to i-th region in each region motion trajectory of the same type is extended to obtain a plurality of second time ranges containing the second time.

Similarly, the second time $t_{2i}$ is extended taking the second time $t_{2i}$ corresponding to i-th region in each region motion trajectory of the same type as the center, and the preset time R as the radius, to obtain a second time range $[l_{2i}, h_{2i}]$ containing the second time $t_{2i}$, where $l_{2i}=t_{2i}-R$, and $h_{2i}=t_{2i}+R$.

Assume that each region motion trajectory of the same type comprises n regions, i may be any integer from 1 to n, so that for each region motion trajectory of the same type, n second time ranges may be obtained respectively. Here, the n second time ranges corresponding to each region motion trajectory of the same type may be expressed as $A2 = [l_{21}, h_{21}] \times \cdots [l_{2n}, h_{2n}]$.

The n first time ranges $A1 = [l_{11},h_{11}] \times \cdots [l_{1n}, h_{1n}]$ corresponding to the reference region motion trajectory and the n second time ranges $A2 = [l_{21},h_{21}] \times \cdots [l_{2n}, h_{2n}]$ corresponding to each region motion trajectory of the same type may be uniformly expressed as A=A1 U A2 U A2 ... U A2.

At step 310, a frequent trajectory is determined according to the first time range and the plurality of second time ranges.

Some implementations of determining the frequent trajectory will be introduced below.

At step S1, a first total number of second time ranges of the plurality of second time ranges at least partially overlapped with the first time range is counted.

At step S2, i-th region in the reference region motion trajectory is determined as a frequent region, and the first time range containing the first time corresponding to i-th region is determined as frequent time period, in a case where the first total number is greater than a preset number.

Other implementations of determining the frequent trajectory will be introduced below.

At step S1', a first total number of second time ranges at least partially overlapped with the first time range is counted.

At step S2', the upper limit and the lower limit of the first time range, and the upper limit and the lower limit of each second time range are arranged in sequential time order to obtain a time sequence, in a case where the first total number is greater than a preset number (for example, a first preset number). The time sequence comprises a plurality of sequence time periods, and the upper limit and the lower limit of each sequence time period are two adjacent times in the time sequence. That is, two adjacent times in the time sequence constitute a sequence time period.

The time sequence may be expressed as the following formula:

$$B = \text{sorted}_{\text{sequence}}\left(\left\{ x \middle| x \in \{l_{1i}, h_{1i}\} \text{ or } \{l_{2i}, h_{2i}\}, \quad i = 1、 2 \ldots n \right\}\right).$$

For example, i=1, the upper limit and the lower limit of the first time range are $l_{11}$ and hn respectively, and the upper limit and the lower limit of each second time range are $l_{21}$ and $h_{21}$ respectively. Here, for different second time ranges, $l_{21}$ and $h_{21}$ may have different values. Therefore, $l_{11}$, $h_{11}$, a plurality of $l_{21}$, and a plurality of $h_{21}$ may be arranged in sequential time order, so that a time sequence may be obtained. When i is of a different value, a different time sequence B may be obtained.

Two adjacent times in the time sequence B constitute a sequence time period $[B_j, B_{j+1}]$, where $1 \leq j \leq M-1$, and M is the number of times in the time sequence B.

At step S3', the frequent trajectory is determined according to the plurality of sequence time periods, the first time range, and the plurality of second time ranges.

For example, a second total number of the first time range and second time ranges of the plurality of second time ranges at least partially overlapped with each sequence time period may be counted. In a case where the second total number is greater than a preset number (for example, a second preset number), it is determined that this sequence time period is a frequent sub-time period, and i-th region in the reference region motion trajectory is a frequent region.

After that, a frequent time period may be determined according to all the frequent sub-time periods. Here, the determined frequent time period contains all the frequent sub-time periods. For example, the lower limit of the frequent time period may be the lower limit which is the earliest of the lower limits of all the frequent sub-time periods, and the upper limit of the frequent time period may be the upper limit which is latest of the upper limits of all the frequent sub-time periods. For example, in a case where all the frequent sub-periods are $[B_1, B_2]$ and $[B_4, B_5]$, the frequent period may be expressed as $[B_1, B_5]$.

In the above implementations, the upper limit and the lower limit of the frequent sub-time periods are two adjacent times in the time sequence. The frequent time period thus determined is finer and more accurate.

Fig. 4 is a schematic flowchart showing a method for recommending time according to some embodiments of the present disclosure.

At step 402, a frequent trajectory of the first object is determined according to the method for determining frequent trajectory of any one of the above embodiments. Here, the frequent trajectory comprises a frequent region and a frequent time period corresponding to the frequent region.

At step 404, whether a service address requested by a user is within a frequent region of the frequent trajectory is judged. If so, proceed to step 406.

In some application scenarios, the service address required by the user may be, for example, a shipping address.

At step 406, the frequent time period corresponding to the frequent region is recommended to the second object, so that a service is provided to the user by the second object according to the frequent time period.

The first object may be, for example, a richly experienced old delivery person, and the second object may be, for example, a poorly experienced new delivery person.

In the above embodiments, in a case where the service address requested by the user is within a certain frequent region of the first object, the frequent time period corresponding to the frequent region may be recommended to the second object. Accordingly, the second object may provide service to the user within the frequent time period or at a time close to the frequent time period to improve the service efficiency.

Various embodiments in this specification are described in a progressive manner. In each embodiment, description is focused on its differences from other embodiments, and cross-reference may be made for the same or similar parts between various embodiments. As for the embodiments of the apparatus, since they substantially correspond to the embodiments of the method, the description is relatively simple, and for related parts, reference may be made to the part in the embodiments of the method.

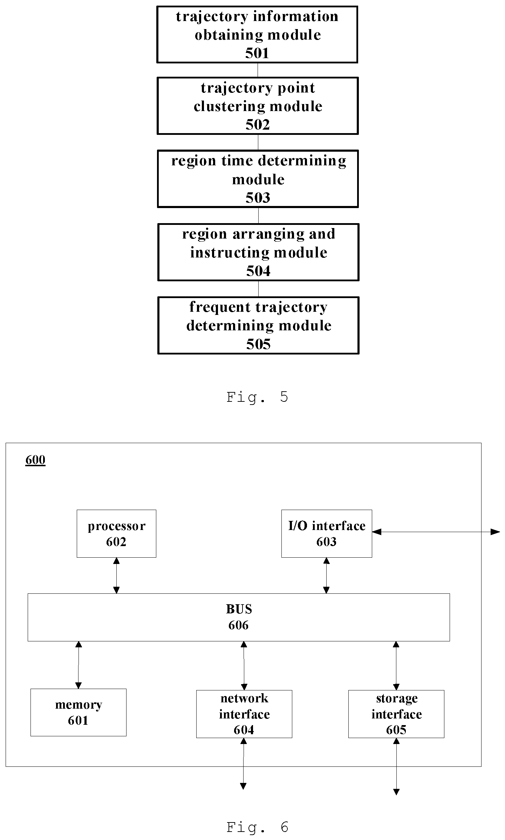

Fig. 5 is a schematic structural view showing an apparatus for determining trajectory according to some embodiments of the present disclosure. As shown in Fig. 5, the apparatus for determining trajectory in these embodiments comprises a trajectory information obtaining module 501, a trajectory point clustering module 502, a region time determining module 503, a region arranging and instructing module 504, and a frequent trajectory determining module 505.

The trajectory information obtaining module 501 is configured to obtain trajectory information of each trajectory point of a plurality of trajectory points of a first object within a preset time period. The trajectory information of each trajectory point comprises a geographic location of each trajectory point and a time when the first object is located at each trajectory point.

The trajectory point clustering module 502 is configured to cluster a plurality of trajectory points according to the geographic location of each trajectory point to obtain a plurality of regions not overlapped with each other. The density of trajectory points in each region of the plurality of regions is greater than a preset density. For example, the trajectory point clustering module 502 is configured to cluster the plurality of trajectory points according to the following method: divide the plurality of trajectory points into a plurality of sub-regions; and combine adjacent sub-regions of the plurality of sub-regions with the density of trajectory points greater than the preset density to obtain the plurality of regions.

In some implementations, the trajectory point clustering module 502 is configured to: select a first sub-region with the density of trajectory points greater than the preset density from the plurality of sub-regions; judge whether the density of trajectory points of a sub-region of the plurality of sub-regions adjacent to the first sub-region is greater than the preset density to obtain a judgment result; combine the first sub-region with the sub-region to obtain a combined sub-region in a case where the judgment result is yes; repeat the judge and the combine by taking the combined sub-region as the first sub-region, until the density of trajectory points of each of the plurality of sub-regions adjacent to the first sub-region is not greater than the preset density to obtain one of the plurality of regions; and repeat the judge and the combine to obtain the plurality of regions, by selecting a sub-region with the density of trajectory points greater than the preset density from remaining sub-regions as the first sub-region.

The region time determining module 503 is configured to determine a time corresponding to each region according to a time of at least one trajectory point in each region.

The region arranging and instructing module 504 is configured to arrange the plurality of regions according to the time corresponding to each region to obtain a region motion trajectory of the first object, and instruct the trajectory information obtaining module 501 to repeatedly obtain the trajectory information to obtain a plurality of region motion trajectories of the first object after the region motion trajectory of the first object is obtained. It should be understood that after the trajectory information obtaining module 501 performs the step of obtaining the plurality of region motion trajectories of the first object, the region time determining module 503 and the region arranging and instructing module 504 respectively perform the subsequent steps of determining the time corresponding to each region and arranging the plurality of regions correspondingly.

The frequent trajectory determining module 505 is configured to determine a frequent trajectory that the first object moves frequently based on the plurality of region motion trajectories. The frequent trajectory comprises a frequent region and a frequent time period corresponding to the frequent region.

In some embodiments, the frequent trajectory determining module 505 is configured to determine a frequent trajectory of frequent motions of the first object in the following manner: select one of the plurality of region motion trajectories as a reference region motion trajectory; determine a plurality of region motion trajectories of a same type as the reference region motion trajectory, wherein $i$-th region in each of the plurality of region motion trajectories of the same type at least partially overlaps with $i$-th region in the reference region motion trajectory, $1 \leq i \leq N \leq M$, one of M and N is a number of regions in the reference region motion trajectory, the other is a number of regions in each of the plurality region motion trajectories of the same type, and the time corresponding to $i$-th region is earlier than the time corresponding to $(i+1)$-th region; extend a first time corresponding to $i$-th region in the reference region motion trajectory to obtain a first time range containing the first time; extend a second time corresponding to $i$-th region in each of the plurality of region motion trajectories of the same type to obtain a plurality of second time ranges each containing the second time; and determine the frequent trajectory according to the first time range and the plurality of second time ranges.

In some embodiments, the frequent trajectory determining module 505 is configured to: count a first total number of second time ranges of the plurality of second time ranges at least partially overlapped with the first time range; arrange an upper limit and a lower limit of the first time range, and an upper limit and a lower limit of each of the plurality of second time ranges in sequential time order to obtain a time sequence, in a case where the first total number is greater than a first preset number, wherein the time sequence comprises a plurality of sequence time periods, and an upper limit and a lower limit of each of the plurality of sequence time periods are two adjacent times in the time sequence; and determine the frequent trajectory according to the plurality of sequence time periods, the first time range, and the plurality of second time ranges.

In some embodiments, the frequent trajectory determining module is configured to: count a second total number of the first time range and second time ranges of the plurality of second time ranges at least partially overlapped with each sequence time period of the plurality of sequence time periods; determine each sequence time period as a frequent sub-time period and determining $i$-th region in the reference region motion trajectory as the frequent region, in a case where the second total number is greater than a second preset number; and determine the frequent time period according to all the frequent sub-time periods, wherein the frequent time period comprises all the frequent sub-time periods. In some implementations, a lower limit of the frequent time period is a lower limit which is the earliest of lower limits of all the frequent sub-periods, and an upper limit of the frequent time period is an upper limit which is the latest of upper limits of all the frequent sub-periods.

Fig. 6 is a schematic structural view showing an electronic apparatus according to some embodiments of the present disclosure. The electronic apparatus in these embodiments may be an apparatus for determining trajectory or an apparatus for recommending time.

As shown in Fig. 6, the electronic apparatus 600 in these embodiments comprises a memory 601 and a processor 602 coupled to the memory 601. The processor 602 is configured to implement the method for determining trajectory or the method for recommending time according to any one of the above embodiments based on instructions stored in the memory 601.

The memory 601 may comprise, for example, a system memory, a fixed non-volatile storage medium, and the like. The system memory may store, for example, an operation system, an application program, a boot loader, and other programs.

The electronic apparatus 600 may further comprise an I/O interface 603, a network interface 604, a storage interface 605, and the like. These interfaces 603, 604, 605 therebetween as well as the memory 601 and the processor 602 therebetween may be connected, for example, via a bus 606. The input/output interface 603 provides a connection interface for input/output devices such as a display, a mouse, a keyboard, or a touch screen. The network interface 604 provides a connection interface for various networking devices. The storage interface 605 provides a connection interface for an external storage device such as an SD card or a USB flash disk.

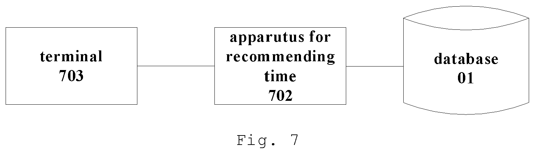

Fig. 7 is a schematic view showing the architecture of a system for recommending time according to some embodiments of the present disclosure.

The database 701 stores trajectory point information of each trajectory point of a plurality of trajectory points of the first object. The apparatus for recommending time 702 may obtain the trajectory point information of each trajectory point of the plurality of trajectory points of the first object from the database 701 and determine a frequent trajectory of the first object according to the above method. The terminal 703 may initiate a request to call a frequent trajectory to the apparatus for recommending time 702. For example, the terminal 703 may send a service address requested by a user to the apparatus for recommending time 702. The apparatus for recommending time 702 may determine a corresponding frequent time period based on the service address and send frequent time period to the terminal 702.

In this way, the second object may provide a service to the user according to the frequent time period received by the terminal 703.

The present disclosure also provides a computer-readable storage medium on which computer program instructions are stored. The method for determining trajectory or the method for recommending time according to any one of the above embodiments is implemented when the instructions are executed by a processor.

Hereto, various embodiments of the present disclosure have been described in detail. Some details well known in the art are not described to avoid obscuring the concept of the present disclosure. According to the above description, those skilled in the art would fully know how to implement the technical solutions disclosed herein.

One skilled in the art should understand that, the embodiments of the present disclosure may be provided as a method, an apparatus, or a computer program product. Therefore, embodiments of the present disclosure can take the form of an entirely hardware embodiment, an entirely software embodiment or an embodiment combining both hardware and software. Moreover, the present disclosure may take the form of a computer program product embodied on one or more computer-usable non-transitory storage media (including but not limited to disk storage, CD-ROM, optical memory, etc.) having computer-usable program code embodied therein.

The present disclosure is described with reference to flowcharts and/or block diagrams of methods, apparatuses (systems) and computer program products according to embodiments of the present disclosure. It should be understood that each process in the flowcharts and/or the functions specified in one or more blocks of the block diagrams may be implemented by computer program instructions. The computer program instructions may be provided to a processor of a general purpose computer, a special purpose computer, an embedded processor, or other programmable data processing device to generate a machine, making the instructions executed by a processor of a computer or other programmable data processing device generate means implementing the functions specified in one or more flows of the flowcharts and/or one or more blocks of the block diagrams.

The computer program instructions may also be stored in a computer readable memory device capable of directing a computer or other programmable data processing device to operate in a specific manner such that the instructions stored in the computer readable memory device produce an article of manufacture including an instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

Although some specific embodiments of the present disclosure have been described in detail by way of examples, those skilled in the art should understand that the above examples are only for the purpose of illustration and are not intended to limit the scope of the present disclosure. It should be understood by those skilled in the art that modifications to the above embodiments and equivalently substitution of part of the technical features can be made without departing from the scope and spirit of the present disclosure. The scope of the disclosure is defined by the following claims.

**Claims**

1. A method for determining trajectory, **characterized by** comprising:

    obtaining trajectory information of each trajectory point of a plurality of trajectory points of a first object within a preset time period, wherein the trajectory information of each trajectory point comprises a geographic location of each trajectory point and a time when the first object is located at each trajectory point;
    clustering the plurality of trajectory points according to the geographic location of each trajectory point to obtain a plurality of regions not overlapped with each other, wherein a density of trajectory points in each region of the plurality of regions is greater than a preset density;
    determining a time corresponding to each region according to a time of at least one of the trajectory points in each region;
    arranging the plurality of regions according to the time corresponding to each region to obtain a region motion trajectory of the first object;
    repeating the obtaining, the clustering, the determining, and the arranging to obtain a plurality of region motion trajectories of the first object; and
    determining a frequent trajectory that the first object moves frequently based on the plurality of region motion trajectories, wherein the frequent trajectory comprises a frequent region and a frequent time period corresponding to the frequent region.

2. The method according to claim 1, wherein the determining a frequent trajectory that the first object moves frequently based on the plurality of region motion trajectories comprises:

    selecting one of the plurality of region motion trajectories as a reference region motion trajectory;
    determining a plurality of region motion trajectories of a same type as the reference region motion trajectory, wherein i-th region in each of the plurality of region motion trajectories of the same type at least partially overlaps with i-th region in the reference region motion trajectory, $1 \leq i \leq N \leq M$, one of M and N is a number of regions in the reference region motion trajectory, the other is a number of regions in each of the plurality region motion trajectories of the same type, and the time corresponding to i-th region is earlier than the time corresponding to (i+1)-th region;
    extending a first time corresponding to i-th region in the reference region motion trajectory to obtain a first time range containing the first time;
    extending a second time corresponding to i-th region in each of the plurality of region motion trajectories of the same type to obtain a plurality of second time ranges each containing the second time; and
    determining the frequent trajectory according to the first time range and the plurality of second time ranges.

3. The method according to claim 2, wherein the determining the frequent trajectory according to the first time range and the plurality of second time ranges comprises:

    counting a first total number of second time ranges of the plurality of second time ranges at least partially overlapped with the first time range;
    arranging an upper limit and a lower limit of the first time range, and an upper limit and a lower limit of each of the plurality of second time ranges in sequential time order to obtain a time sequence, in a case where the first total number is greater than a first preset number, wherein the time sequence comprises a plurality of sequence time periods, and an upper limit and a lower limit of each of the plurality of sequence time periods are two adjacent times in the time sequence; and
    determining the frequent trajectory according to the plurality of sequence time periods, the first time range, and the plurality of second time ranges.

4. The method according to claim 3, wherein the determining the frequent trajectory according to the plurality of sequence time periods, the first time range, and the plurality of second time ranges comprises:

counting a second total number of the first time range and second time ranges of the plurality of second time ranges at least partially overlapped with each sequence time period of the plurality of sequence time periods; determining each sequence time period as a frequent sub-time period and determining i-th region in the reference region motion trajectory as the frequent region, in a case where the second total number is greater than a second preset number; and
determining the frequent time period according to all the frequent sub-time periods, wherein the frequent time period comprises all the frequent sub-time periods.

5. The method according to claim 4, wherein a lower limit of the frequent time period is a lower limit which is the earliest of lower limits of all the frequent sub-periods, and an upper limit of the frequent time period is an upper limit which is the latest of upper limits of all the frequent sub-periods.

6. The method according to any one of claims 1-5, wherein the clustering the plurality of trajectory points comprises:

dividing the plurality of trajectory points into a plurality of sub-regions; and
combining adjacent sub-regions of the plurality of sub-regions with the density of trajectory points greater than the preset density to obtain the plurality of regions.

7. The method according to claim 6, wherein the combining adjacent sub-regions of the plurality of sub-regions with the density of trajectory points greater than the preset density comprises:

selecting a first sub-region with the density of trajectory points greater than the preset density from the plurality of sub-regions;
judging whether the density of trajectory points of a sub-region of the plurality of sub-regions adjacent to the first sub-region is greater than the preset density to obtain a judgment result;
combining the first sub-region with the sub-region to obtain a combined sub-region in a case where the judgment result is yes;
repeating the judging and the combining by taking the combined sub-region as the first sub-region, until the density of trajectory points of each of the plurality of sub-regions adjacent to the first sub-region is not greater than the preset density to obtain one of the plurality of regions; and
repeating the judging and the combining to obtain the plurality of regions, by selecting a sub-region with the density of trajectory points greater than the preset density from remaining sub-regions as the first sub-region.

8. A method for recommending time, **characterized by** comprising:

determining the frequent trajectory of the first object according to the method of any one of claims 1-7;
judging whether a service address requested by a user is within the frequent region of the frequent trajectory;
recommending the frequent time period corresponding to the frequent region to a second object in a case where the service address is within the frequent region of the frequent trajectory, so that a service is provided to the user by the second object according to the frequent time period.

9. An apparatus for determining motion trajectory, comprising:

a trajectory information obtaining module configured to obtain trajectory information of each trajectory point of a plurality of trajectory points of a first object within a preset time period, wherein the trajectory information of each trajectory point comprises a geographic location of each trajectory point and a time when the first object is located at each trajectory point;
a trajectory point clustering module configured to cluster the plurality of trajectory points according to the geographic location of each trajectory point to obtain a plurality of regions not overlapped with each other, wherein a density of trajectory points in each region of the plurality of regions is greater than a preset density;
a region time determining module configured to determine a time corresponding to each region according to a time of at least one of the trajectory points in each region;
a region arranging and instructing module configured to arrange the plurality of regions according to the time corresponding to each region to obtain a region motion trajectory of the first object, and instruct the trajectory information obtaining module to repeatedly obtain the trajectory information to obtain a plurality of region motion trajectories of the first object after the region motion trajectory of the first object is obtained; and
a frequent trajectory determining module configured to determine a frequent trajectory that the first object moves frequently based on the plurality of region motion trajectories, wherein the frequent trajectory comprises a frequent region and a frequent time period corresponding to the frequent region.

10. The apparatus according to claim 9, wherein the frequent trajectory determining module is configured to:

select one of the plurality of region motion trajectories as a reference region motion trajectory;
determine a plurality of region motion trajectories of a same type as the reference region motion trajectory, wherein i-th region in each of the plurality of region motion trajectories of the same type at least partially overlaps with i-th region in the reference region motion trajectory, $1 \leq i \leq N \leq M$, one of M and N is a number of regions in the reference region motion trajectory, the other is a number of regions in each of the plurality region motion trajectories of the same type, and the time corresponding to i-th region is earlier than the time corresponding to (i+1)-th region;
extend a first time corresponding to i-th region in the reference region motion trajectory to obtain a first time range containing the first time;
extend a second time corresponding to i-th region in each of the plurality of region motion trajectories of the same type to obtain a plurality of second time ranges each containing the second time; and
determine the frequent trajectory according to the first time range and the plurality of second time ranges.

11. The apparatus according to claim 10, wherein the frequent trajectory determining module is configured to:

count a first total number of second time ranges of the plurality of second time ranges at least partially overlapped with the first time range;
arrange an upper limit and a lower limit of the first time range, and an upper limit and a lower limit of each of the plurality of second time ranges in sequential time order to obtain a time sequence, in a case where the first total number is greater than a first preset number, wherein the time sequence comprises a plurality of sequence time periods, and an upper limit and a lower limit of each of the plurality of sequence time periods are two adjacent times in the time sequence; and
determine the frequent trajectory according to the plurality of sequence time periods, the first time range, and the plurality of second time ranges.

12. The apparatus according to claim 11, wherein the frequent trajectory determining module is configured to:

count a second total number of the first time range and second time ranges of the plurality of second time ranges at least partially overlapped with each sequence time period of the plurality of sequence time periods;
determine each sequence time period as a frequent sub-time period and determining i-th region in the reference region motion trajectory as the frequent region, in a case where the second total number is greater than a second preset number; and
determine the frequent time period according to all the frequent sub-time periods, wherein the frequent time period comprises all the frequent sub-time periods.

13. The apparatus according to claim 12, wherein a lower limit of the frequent time period is a lower limit which is the earliest of lower limits of all the frequent sub-periods, and an upper limit of the frequent time period is an upper limit which is the latest of upper limits of all the frequent sub-periods.

14. The apparatus according to any one of claims 9-13, wherein the trajectory point clustering module is configured to:

divide the plurality of trajectory points into a plurality of sub-regions; and
combine adjacent sub-regions of the plurality of sub-regions with the density of trajectory points greater than the preset density to obtain the plurality of regions.

15. The apparatus according to claim 14, wherein the trajectory point clustering module is configured to:

select a first sub-region with the density of trajectory points greater than the preset density from the plurality of sub-regions;
judge whether the density of trajectory points of a sub-region of the plurality of sub-regions adjacent to the first sub-region is greater than the preset density to obtain a judgment result;

combine the first sub-region with the sub-region to obtain a combined sub-region in a case where the judgment result is yes;

repeat the judge and the combine by taking the combined sub-region as the first sub-region, until the density of trajectory points of each of the plurality of sub-regions adjacent to the first sub-region is not greater than the preset density to obtain one of the plurality of regions; and

repeat the judge and the combine to obtain the plurality of regions, by selecting a sub-region with the density of trajectory points greater than the preset density from remaining sub-regions as the first sub-region.

16. An apparatus for determining trajectory, **characterized by** comprising:

a memory; and

a processor coupled to the memory, wherein the processor is configured to implement the method according to any one of claims 1 to 7 based on instructions stored in the memory.

17. An apparatus for recommending time, **characterized by** comprising:

a memory; and

a processor coupled to the memory, wherein the processor is configured to implement the method according to claim 8 based on instructions stored in the memory.

18. A system for recommending time, **characterized by** comprising:

a database configured to store trajectory point information of each trajectory point of a plurality of trajectory points of a first object;

the apparatus for recommending time according to claim 17; and

a terminal configured to send a service address requested by a user to the apparatus for recommending time and receive the frequent time period sent by the apparatus for recommending time.

19. A computer-readable storage medium having computer program instructions stored thereon, **characterized in that** the method according to any one of claims 1 to 8 is implemented when the instructions are executed by a processor.

obtain trajectory information of each trajectory point of a plurality of trajectory points of a first object within a preset time period, the trajectory information of each trajectory point comprising a geographic location of each trajectory point and a time when the first object is located at each trajectory point — 102

cluster the plurality of trajectory points according to the geographic location of each trajectory point to obtain a plurality of regions not overlapped with each other, a density of trajectory points in each region being greater than a preset density — 104

determine a time corresponding to each region according to a time of at least one of the trajectory points in each region — 106

arrange the plurality of regions according to the time corresponding to each region to obtain a region motion trajectory of the first object — 108

determine a frequent trajectory that the first object moves frequently based on the plurality of region motion trajectories — 110

Fig. 1

divide the plurality of trajectory points into a plurality of sub-regions according to the geographic location of each trajectory point      *202*

select a first sub-region with the density of trajectory points greater than the preset density from the plurality of sub-regions      *204*

judge whether the density of trajectory points of a sub-region of the plurality of sub-regions adjacent to the first sub-region is greater than the preset density      *206*

Yes

combine the first sub-region with the sub-region to obtain a combined sub-region      *208*

take the combined sub-region as the first sub-region      *210*

select a sub-region with the density of trajectory points greater than the preset density from remaining sub-regions as the first sub-region      *212*

Fig. 2

| select one of the plurality of region motion trajectories as a reference region motion trajectory | 302 |

| determine a plurality of region motion trajectories of a same type as the reference region motion trajectory | 304 |

| extend a first time corresponding to i-th region in the reference region motion trajectory to obtain a first time range containing the first time | 306 |

| extend a second time corresponding to i-th region in each of the plurality of region motion trajectories of the same type to obtain a plurality of second time ranges each containing the second time | 308 |

| determine the frequent trajectory according to the first time range and the plurality of second time ranges | 310 |

Fig. 3

| determine the frequent trajectory of the first object according to the method for determining trajectory | 402 |

| judge whether a service address requested by a user is within a frequent region of the frequent trajectory | 404 |

Yes

| recommend the frequent time period corresponding to the frequent region to a second object, so that a service is provided to the user by the second object according to the frequent time period | 406 |

Fig. 4

trajectory information
obtaining module
501

trajectory point
clustering module
502

region time determining
module
503

region arranging and
instructing module
504

frequent trajectory
determining module
505

Fig. 5

600

processor
602

I/O interface
603

BUS
606

memory
601

network
interface
604

storage
interface
605

Fig. 6

| terminal 703 | apparutus for recommending time 702 | database 01 |

Fig. 7

## INTERNATIONAL SEARCH REPORT

| International application No. |
| --- |
| **PCT/CN2019/099248** |

**A.    CLASSIFICATION OF SUBJECT MATTER**

G06Q 30/02(2012.01)i;  G01C 21/00(2006.01)i

According to International Patent Classification (IPC) or to both national classification and IPC

**B.    FIELDS SEARCHED**

Minimum documentation searched (classification system followed by classification symbols)

G06Q; G01C

Documentation searched other than minimum documentation to the extent that such documents are included in the fields searched

Electronic data base consulted during the international search (name of data base and, where practicable, search terms used)

CNPAT, CNKI, WPI, EPODOC: 确定, 聚类, 区段, 区域, 轨迹, 跟踪, 频繁, 运动, 移动, 行动, 位置, 时间, 密度, 排列, 排序, 轨迹点, 快递员, 配送员, determine, region, area, position, location, frequency, path, clustering, trace, track, point, move, mobile, action, trajectory, travel, time, express

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 108509434 A (CHINA MOBILE GROUP DESIGN INSTITUTE CO., LTD. ET AL.) 07 September 2018 (2018-09-07)<br>    description, paragraphs [0039]-[0087] | 1-19 |
| Y | CN 104075709 A (BAIDU ONLINE NETWORK TECHNOLOGY (BEIJING) CO., LTD.) 01 October 2014 (2014-10-01)<br>    description, paragraphs [0042]-[0078] | 1-19 |
| A | CN 105095617 A (INTERNATIONAL BUSINESS MACHINES CORPORATION) 25 November 2015 (2015-11-25)<br>    entire document | 1-19 |
| A | CN 106327236 A (HUAWEI TECHNOLOGIES CO., LTD. ET AL.) 11 January 2017 (2017-01-11)<br>    entire document | 1-19 |
| A | CN 106447258 A (SHANGHAI DEQI INFORMATION TECHNOLOGY CO., LTD.) 22 February 2017 (2017-02-22)<br>    entire document | 1-19 |

☑ Further documents are listed in the continuation of Box C.       ☑ See patent family annex.

| | |
| --- | --- |
| *    Special categories of cited documents:<br>"A"  document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"  document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **10 October 2019** | **28 October 2019** |

| Name and mailing address of the ISA/CN | Authorized officer |
| --- | --- |
| **China National Intellectual Property Administration**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2019/099248** |

**C.    DOCUMENTS CONSIDERED TO BE RELEVANT**

| Category* | Citation of document, with indication, where appropriate, of the relevant passages | Relevant to claim No. |
|---|---|---|
| A | WO 2008134595 A1 (PELAGO INC. ET AL.) 06 November 2008 (2008-11-06) entire document | 1-19 |

Form PCT/ISA/210 (second sheet) (January 2015)

**INTERNATIONAL SEARCH REPORT**
Information on patent family members

International application No.

**PCT/CN2019/099248**

| Patent document cited in search report | | | Publication date (day/month/year) | Patent family member(s) | | | Publication date (day/month/year) |
|---|---|---|---|---|---|---|---|
| CN | 108509434 | A | 07 September 2018 | None | | | |
| CN | 104075709 | A | 01 October 2014 | None | | | |
| CN | 105095617 | A | 25 November 2015 | US | 2015308843 | A1 | 29 October 2015 |
| CN | 106327236 | A | 11 January 2017 | None | | | |
| CN | 106447258 | A | 22 February 2017 | None | | | |
| WO | 2008134595 | A1 | 06 November 2008 | US | 2015106206 | A1 | 16 April 2015 |
| | | | | US | 2009005987 | A1 | 01 January 2009 |
| | | | | US | 2012310736 | A1 | 06 December 2012 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811080091